(19) Europäisches Patentamt
European Patent Office
Office européen des brevets

(11) **EP 3 070 415 A1**

(12) **EUROPEAN PATENT APPLICATION**

(43) Date of publication:
**21.09.2016 Bulletin 2016/38**

(51) Int Cl.:
***F24J 2/06*** *(2006.01)*   ***F24J 2/07*** *(2006.01)*

(21) Application number: **15159194.8**

(22) Date of filing: **16.03.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **ETH Zurich
8092 Zurich (CH)**

(72) Inventors:
• **Steinfeld, Aldo
5200 Brugg (CH)**
• **Cooper, Thomas
Singhampton, Ontario
N0C 1M0 (CA)**
• **Haueter, Philipp
5022 Rombach (CH)**

(54) **Solar deflection device**

(57)    Solar deflection device (1) comprising at least the following components:
- a hollow funnel (2), comprising a funnel wall (2a) that comprises a reflective surface (2b) on an inside of the funnel (2) for reflecting electromagnetic radiation,
- an inlet aperture (3) of said funnel (2), wherein the inlet aperture (3) extends within an inlet plane (3a),
- an exit aperture (4) of said funnel (2), wherein the exit aperture (4) extends within an exit plane (4a) and wherein the area (4b) enclosed by the exit aperture (4) has a different size than the area (3b) enclosed by the inlet aperture (3),
- a curved line that (5) extends from the center (3c) of the inlet aperture (3) to the center (4c) of the exit aperture (4), wherein for each plane (6a) that intersects said curved line (5) perpendicularly, the reflective surface (2b) of the funnel wall (2a) has a cross-section (6) within said plane (6a), wherein said cross-section (6) encloses an area (6b) and is centered around the curved line (5),
- a deflection angle (7) that is enclosed between said plane (6a) and the inlet plane (3a).

Fig. 3

**Description**

The invention relates to a device for deflecting electromagnetic, particularly solar and/or thermal radiation, according to claim 1.

Solar reactor systems generally comprise a solar concentrator that is designed to collect and concentrate solar radiation and to provide said radiation as an energy source for driving various processes. Such processes for example comprise chemical reactions or physical processes the latter for example driving a motor or a turbine. Solar reactor systems designed for driving the $H_2O/CO_2$-splitting thermochemical redox cycle using concentrated solar radiation are of particular interest.

Such splitting reactions for example comprise a two-step process that is given by a first endothermic step comprising a solar-driven thermal reduction of a metal oxide that requires thermal energy for being reduced to a metal or a lower valence metal oxide and a second, non-solar step that is exothermic that comprises the oxidation reaction of the reduced lower valence metal oxide with water or carbon dioxide to the higher valence metal oxide and hydrogen or carbon monoxide:

1st step, reduction:

$$2\ MO_{ox} \rightarrow 2\ MO_{red} + O_2$$

2nd step, oxidation:

$$MO_{red} + H_2O \rightarrow MO_{ox} + H_2$$

or

$$MO_{red} + CO_2 \rightarrow MO_{ox} + CO$$

The use of solar reactor systems provides a sustainable way for energy conversion. However, as can be seen for example from the above equations, a two-step process that particularly requires a cooling period (for example the 2nd step), would need interruption of the solar radiation exposure. On the other hand, solar radiation is not permanently available as weather conditions might change or it is interrupted by the day-night circle. It might be economically disadvantageous to interrupt (and thus discard) solar radiation exposure of the process, when weather conditions are favorable, i.e. sunny. In order to circumvent this problem, reactor systems comprising two reaction chambers have been designed in order to alternately provide solar radiation to one of the two chambers. These reactor systems offer the possibility of moving the two cavities such that each cavity's aperture is alternately centered at the focal plane of the solar concentrator. Alternatively the concentrator is moved in order to shift the focal plane relative to a fixed cavity. Both solutions are deemed unpractical due to complications that might arise by moving high-temperature reactors or by moving the solar concentrating system.

One solution to this problem is to provide a secondary optical element that is rotatably arranged in a solar reactor such that it can be rotated between two positions, wherein in each position the solar radiation from the solar concentrator is guided in one of the reaction chambers, leading to an alternating distribution of the solar radiation to the reaction chambers. Such secondary optical element, subsequently termed solar deflection device, has the advantage that it is comparably more cost-effective and more robust than moving solar reactors or moving concentrators.

Such a deflection device - by design- has a nominal half acceptance angle that describes the highest angle under which radiation incident on the deflection device is still guided through the device and is not rejected.

As the incident solar radiation from the solar concentrator is not collimated, reflections inside of such a deflection device are leading to energy losses. Several designs of deflection devices are known, such as a funnel being a torus segment (a so-called toroidal angle rotator) as suggested by [1], but suffer from various disadvantages, most importantly a high number of reflections.

Therefore, the problem underlying the present invention is to provide a solar deflection device particularly for a solar reactor system, allowing solar radiation to be guided with minimal losses at a given angular acceptance angle, and at the same time providing additional concentration.

Such a deflection device is particularly used as a secondary optical arrangement that is incorporated into a solar reactor system in tandem with a solar concentrator.

The problem according the invention is solved by a device having the features of claim 1. Preferred embodiments are stated in the sub claims.

According to the present invention, a solar deflection device comprises at least the following components:

- a hollow funnel, comprising a funnel wall that comprises a reflective surface on an inside of the funnel for reflecting electromagnetic, particularly solar and/or thermal radiation,
- an inlet aperture of said funnel, wherein the inlet aperture is extends in an inlet plane,
- an exit aperture of said funnel, wherein the exit aperture is extends in an exit plane and wherein area enclosed by the exit aperture has a different size than the area along the respective plane enclosed by the inlet aperture,
- an essentially curved line that extends from the center of the enclosed area of the inlet aperture to the center of the enclosed area of the exit aperture, wherein for each plane that intersects said curved line perpendicularly to a tangent at said intersection point, the reflective surface of the funnel wall has a cross-section along said plane, wherein said cross-section encloses an area and is centered around the curved line,
- a deflection angle that is enclosed between said plane and the inlet plane, wherein in case said plane and the inlet plane do not intersect, the deflection angle is defined as zero.

Electromagnetic radiation in this context refers particularly to solar and/or thermal radiation.

The reflective surface particularly reflects electromagnetic radiation from solar or thermal radiation sources, particularly in a wavelength range that covers the ultraviolet, visible, near-infrared, and/or infrared portion of the electromagnetic spectrum. In order to maximize the collection efficiency, the reflective surface material is particularly reflective from 280 nm to 4000 nm, as this is particularly the range used for the ASTM (American Society for Testing and Materials) Air Mass 1.5 Direct Solar Spectrum specification that for example provides terrestrial reference spectra for photovoltaic performance evaluation.

Furthermore the reflective surface has particularly predominantly specular reflectivity properties, wherein particularly a small fraction of small angle scattering and diffuse reflection is permissible. The term specular reflectivity particularly refers to a mirrorlike reflection that stands in contrast to diffuse reflection.

In a preferred embodiment the reflective surface wall has a reflectivity that is larger than 60%, particularly larger than 90%, more particularly larger than 95% particularly within a design wavelength range or within regions of the design wavelength range. For example pure aluminium has a reflectance above 85% across the range 200 nm to 4000 nm; pure silver has a reflectance above 90% from 500 nm to 4000 nm.

It is particularly advantageous that the material used for reflection of radiation comprises a large total reflectance over that wavelength range, i.e. a high spectral power weighted average.

As the solar deflection device comprises a funnel, said funnel particularly comprises a rim at the inlet and exit aperture respectively. It is noted that said rim might not be planar (i.e. lies within a plane) but can exhibit various shapes. In one embodiment of the invention the rim at the exit aperture particularly encloses an opening that follows a line along the surface of a cone. Said cone-shaped rim is particularly necessary to allow for rotation in a solar reactor system.

In most practical cases where the solar deflection device is intended to rotate, the rim of the exit aperture will therefore particularly be defined as the area enclosed by a closed curve traced on a cone, wherein the exit aperture nonetheless is comprised in an exit plane.

The curved line is of virtual nature. Furthermore the curved line particularly comprises short sections that are straight. These sections particularly add up to less than 20 % , particularly less than 10 % of the total length of the curved line.

In one embodiment said curved line does not exhibit a change of the sign of the curvature, i.e. the curve does particularly not comprise a point of inflection or a point where the curvature is zero.

The above mentioned center of an area, particularly the area of the inlet and exit aperture, is particularly given by the center of area.

The term "perpendicularly" refers to a 90° angle enclosed between a tangent of the curved line at a point of contact or intersection with a respective plane. Such planes are for example the inlet plane, the exit plane or the plane of the cross-section.

The solar deflection device particularly has the advantage that it can be used for particularly secondary solar concentration and that it might be designed for a maximum optical efficiency of the solar deflection device, which is a compromise between number of reflections and ray-rejection. For example a long slender design has lower rejection but more reflections; a short design has higher rejection but less reflections. The optimal design depends on the reflectance of the surface as this dictates how much energy is lost per reflection.

In preferred embodiment of the invention, the area enclosed by the inlet aperture, the exit aperture and/or the cross-section has/have an oval, particularly a circular shape or elliptical shape.

Thus, particularly the inlet and exit aperture might comprise different shapes, such that they particularly are suitable for various inlet and/or exit geometries of particularly solar reactor systems. Particularly intermediate cross-sectional shapes of the solar deflection device can for example be derived by a so-called lofting process. In another embodiment of the invention at preferably each point of the curved line, the curved line has a curvature that is other, particularly larger than zero. Thus, the solar deflection device exhibits particularly a shape that is curved along one direction, preferably without being sinuous. This geometry particularly is ensuring a low number of reflections with the funnel of the solar deflection device.

According to another embodiment of the invention, said curved line is an arc, particularly a circular arc line or a non-parabolic line that in case of a circular shape particularly has a center in a common origin of a Cartesian coordinate system.

In some cases it might be advantageous if the curved line has a parabolic shape. According to a preferred embodiment of the invention, the aperture area of the inlet aperture is larger than the aperture area of the exit aperture, such that the solar deflection device exhibits particularly a tapered funnel. This embodiment is particularly advantageous as such a solar deflection device might further concentrate incident electromagnetic radiation while simultaneously redirecting said radiation along a predefined direction.

In another embodiment of the invention, the size of the enclosed area of the cross-section, particularly the diameter of the cross-section is a continuous function of said deflection angle. Particularly if the cross-section has a circular shape, said function is a continuous function of the diameter or radius of the cross-section and the deflection angle. This is an advantageous way to particularly parametrize the shape of the reflective surface of the solar deflection device with a single parameter, namely with the deflection angle.

In another preferred embodiment of the invention, the function is continuously differentiable at least once, particularly twice, more particularly three times. This allows particularly for a smooth shape of the reflective surface of the funnel, which in turn is advantageous to keep losses due to transmission of the electromagnetic radiation through the funnel at a minimum.

In a variation of the invention, the function is a monotonic function, particularly a strictly monotonic function. This in turn particularly allows for a tapered shape of the reflective surface of the funnel, such that particularly a concentration of the incident electromagnetic radiation is achievable.

In another embodiment of the invention, the function is an interpolating function, comprising the area, particularly the diameter or the radius, of the inlet aperture and the area, particularly the diameter or the radius of the exit aperture as interpolation points. This embodiment is advantageous as only a few interpolations points are required particularly in order to fully describe the reflective surface of the funnel.

In another embodiment of the invention the function comprises a spline, particularly a linear, a quadratic or a cubic, particularly a natural cubic spline. Spline functions are a specific form of interpolation functions. Depending on the number of interpolation points different kinds of splines might be used as interpolation function.

A spline is a function that is particularly piecewise-defined by polynomial functions. A spline particularly possesses a sufficiently high degree of smoothness at the places where the polynomial pieces connect. These places are called interpolation points or knots.

A spline is an advantageous interpolating function that is comparably easy to handle computationally (as compared to e.g. polynomial interpolants).

In another embodiment of the invention the function comprises or is a piecewise particularly natural cubic spline connecting a plurality of interpolation points, wherein particularly the size of the enclosed area, particularly the diameter or radius of the inlet aperture and the size of the enclosed area, particularly the diameter or the radius of the exit aperture are two of the plurality of interpolation points and wherein particularly a third interpolation point corresponds to the size of the enclosed area, particularly to the diameter or radius of the cross-section of the reflective surface of the funnel wall that lies in a plane that is particularly perpendicular to the curved line between the inlet plane and the exit plane.

Particularly due to the high degree of smoothness, the cubic spline is a preferred interpolation function.

In order to maximize the transfer efficiency of the solar deflection device, that is to minimize reflective losses of the electromagnetic radiation within the funnel and keep ray rejection low, particularly the position of the third interpolation point corresponding to the area of the cross-section can be tailored by e.g. ray-tracing simulations. Furthermore optimization of transfer efficiency might be achieved also by varying the area of the cross-section(s).

In another embodiment of the invention, the solar deflection device comprises a nominal half acceptance angle between 30° and 60°, preferably 45°. The nominal half acceptance angle is particularly defined as the angle under which electromagnetic radiation incident on the inlet aperture of the solar deflection device is theoretically guided through the funnel. Said acceptance angle is measured with respect to a surface normal of the area of the inlet aperture.

In another embodiment of the invention, the inlet plane comprising the inlet aperture and the exit plane comprising the exit aperture enclose a deflection angle between 30° and 60°, preferably 45°.

In another embodiment of the invention the inlet plane and the exit plane are perpendicular to the curved line at the respective point of contact.

Further features and advantages of the invention shall be described by means of a detailed description of embodiments with reference to the Figures and examples. It is specifically shown in:

Fig. 1    a schematic cross-section of a solar deflection device according to the invention;
Fig. 2    a cross-section through the solar deflection device;
Fig. 3    a three-dimensional view of a solar deflection device according to the invention;

Fig. 4    a cross-section through a solar deflection device whose width is described by an interpolation function comprising three knots;

Fig. 5    a cross-section through a solar deflection device whose width is described by an interpolation function;

Fig. 6    a cross-section through a toroidal angle rotator;

Fig. 7    a cross-section through a light pipe;

Fig. 8    a cross-section through a multi-compound solar deflection device;

Fig. 9    a cross-section through eccentric flow line concentrator;

Fig. 10   a cross-section through an EAR concentrator and a multi-compound EAR concentrator;

Fig. 11   a diagram of the acceptance efficiency versus the eccentricity of the solar deflection device;

Fig. 12   a diagram of the average number of reflections versus the eccentricity of the solar deflection device;

Fig. 13   a diagram of the optical efficiency versus the eccentricity of the solar deflection device;

Fig. 14   a diagram of the optical efficiency versus the eccentricity of the solar deflection device;

Fig. 15   a setup of the ray-tracing simulation; and

Fig. 16   a three-dimensional grid-rendering of the solar deflection device.

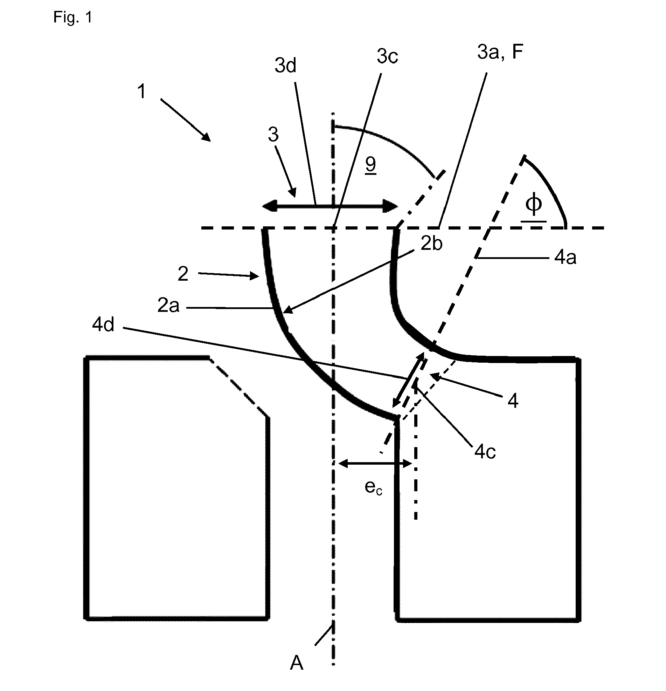

Fig. 1 to Fig. 3 and Fig. 16 show one embodiments of the solar deflection device 1 according to the invention. The solar deflection device 1 comprises an inlet aperture 3 comprised in an inlet plane 3a, wherein the inlet aperture 3 is centered around an optical axis A of a solar concentrator and is furthermore arranged at the focal plane F of the solar concentrator. The solar deflection device 1 further comprises a funnel 2 comprising a reflective funnel surface 2b on an inside of the funnel 2. The funnel 2 is tapered and leads to an exit aperture 4 comprised in an exit plane 4a that encloses a deflection angle 7 with the inlet plane 3a. The inlet and exit aperture 3, 4 are particularly circular and comprise an inlet diameter 3d and an exit diameter 4d respectively. The lateral shift between the centers 3c, 4c of the inlet and exit aperture 3, 4, is called the center-to-center eccentricity $e_c$. In this example the diameter 4d of the exit aperture 4 is 50 mm, wherein the deflection angle 7 between the inlet plane 3a and the exit plane 4a is 45°. The nominal half acceptance angel 9 is the largest angle under which incident rays of radiation are still guided through the solar deflection device 1, wherein said half acceptance angle 9 is measured from a surface-normal of e.g. the inlet aperture 3 (in Fig. 1 the surface normal is corresponding to the optical axis A). It is assumed that incident rays enclosing a smaller angle are transmitted by the solar deflection device 1. In most examples the nominal half acceptance angle 9 is considered to be 45°. Such a nominal half acceptance angle 9 gives rise to a so-called geometric concentration of $C = 1/\sin^2(\theta)$.

Wherein C is the geometric concentration and $\theta$ is the nominal half acceptance angle 9.

In the following some figures of merit will be introduced that are typically used to describe a solar concentrator and/ or solar deflection device 1.

Geometric concentration:

The geometric concentration C is the ratio of the inlet aperture area 3b to the exit aperture area 4b. For circular inlet and exit apertures 3, 4 the geometric concentration C is equal to the ratio of the square of the inlet aperture diameter 3d to the exit aperture diameter 4d.

$$C = A_i/A_o = (D_i/D_o)^2 \qquad\qquad (Eq.\ 1)$$

with

$D_i$ denoting the inlet aperture diameter 3d,

$D_o$ denoting the exit aperture diameter 4d,

$A_i$ denoting the inlet aperture area 3b, and

$A_o$ denoting the exit aperture area 4b.

While the geometric concentration C can in principle have any value ($D_o$ may be made arbitrarily small), there is a theoretical upper limit of C above which some of the radiation within the half acceptance angle $\theta$ must be rejected by the solar deflection device 1. This limit is set by conservation of étendue and is equal in three dimensions to:

$$C = 1/\sin^2(\theta) \qquad\qquad (Eq.\ 2)$$

Usually this is taken as the limit for C, since a higher geometric concentration C will necessarily lead to losses in acceptance efficiency. For the given problem with $\theta = 45°$, the maximum geometric concentration C equals 2. Unless otherwise stated, the following designs considered here are constructed with C = 2.

Optical efficiency

The optical efficiency $\eta_{optical}$ is the fraction of radiant power entering the inlet aperture 3 of the solar deflection device 1, which reaches the exit aperture 4 accounting for all loss mechanisms (rejection and absorption):

$$\eta_{optical} = Q_o/Q_i \qquad\qquad (Eq.\ 3)$$

with $O_j$ being the power of the radiation incident on the inlet aperture within the nominal half acceptance angel, and $Q_o$ being the power at the exit aperture.

Acceptance efficiency

The acceptance efficiency $\eta_{acc}$ is the optical efficiency $\eta_{optical}$ considering losses only by ray rejection, i.e. for a solar deflection device 1 with perfect mirrors (reflectivity $\rho$ of 1). It is a function only of the geometry of the solar deflection device 1 and the distribution of incident radiation at the inlet aperture 3.

$$\eta_{acc} = \eta_{optical}(\rho = 1) \qquad\qquad (Eq.\ 4)$$

A solar deflection device 1, particularly a solar radiation concentrator is called ideal, if it has no rejection, i.e. an acceptance efficiency of 1, for all rays within the nominal half acceptance angle 9 (also referred to as $\theta$).

Average number of reflections

The average number of reflections (n) is a figure of merit for assessing the degree to which electromagnetic radiation is absorbed by mirror surfaces of finite reflectivity.
Following the work of Rabl [2] an approximation for the optical efficiency $\eta_{optical}$ of an optical system with finite reflectivity $\rho$ is:

$$\eta_{optical}(\rho) \approx \eta_{acc} \cdot \rho^{\langle n \rangle} \qquad\qquad (Eq.\ 5)$$

The average number of reflections (n) can therefore be obtained from:

$$\langle n \rangle \approx \frac{\log(\eta_{optical}(\rho)/\eta_{acc})}{\log(\rho)} \qquad\qquad (Eq.\ 6)$$

Eq. (5) can subsequently be used to estimate the optical efficiency $\eta_{optical}$ for a different reflectivity $\rho$, provided the reflectivity $\rho$ is high and reasonably close to the value used in the Eq. (6) to evaluate (n).

Expected efficiency

An estimate of the attainable efficiency of a redirecting and concentrating solar deflection device can be estimated by considering typical values of the acceptance efficiency $\eta_{acc}$ and the average number of reflections $\langle n \rangle$. Assuming an acceptance efficiency $\eta_{acc}$ of 90% and on average one reflection to redirect the ray plus one reflection to concentrate yields:

$$\eta_{optical}(\rho) = 0.9\ \rho^2 \qquad\qquad (Eq.\ 7)$$

Assuming a mirror reflectivity $\rho$ of 95% yields $\eta_{optical}$ equals 81%. This is regarded as a reasonable value to aim for with the solar deflection device 1 according to the invention.

Design strateav - from two dimensions to three dimensions

In general, solar deflection devices profiles are designed in two dimensions. Most three dimensional designs considered have circular inlet and exit apertures. Where axial symmetry is possible three dimensional profiles are obtained by revolving 2D axes about the optic axis. Where not, three dimensional profiles are obtained by lofting circular inlet and exit apertures using the two dimensional profile as guide curves.

Examples of various designs of solar deflection devices

a) The toroidal angle rotator (TAR) was investigated by Collares-Pereira and Mendes [1] for redirecting concentrated radiation who showed that such a device has no rejection. Unfortunately, for incident radiation having an angular aperture smaller than 90°, the angular aperture is not conserved by the toroid, even in the meridian section. The extreme ray striking the inner circle with an angle $\theta_{i,max}$ is dilated to a maximum angle of $\theta_{o,max}$ when the exit aperture cuts the ray exactly out of phase. At this point the outlet angle is dilated to: $\cos(\theta_{o,max}) = \frac{r}{R}\cos(\theta_{i,max})$ , wherein R is the outer radius of the torus and r is the inner radius of the torus.

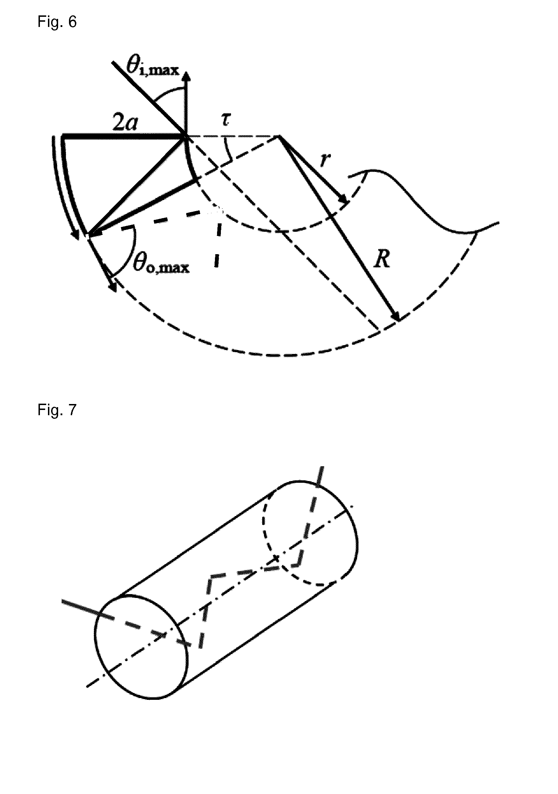

Fig. 6 shows the dilation of angular aperture in the meridian section of a toroidal angle rotator. The extreme ray hitting the inner circle dilates to a maximum value when the aperture cut the ray path exactly out of phase. Cutting the aperture at a different location does not significantly improve the situation. For this reason, the torus is of practical use only for redirecting radiation having an angular aperture near 90°. However with such a large angular aperture, the torus suffers from a higher average number of reflections.

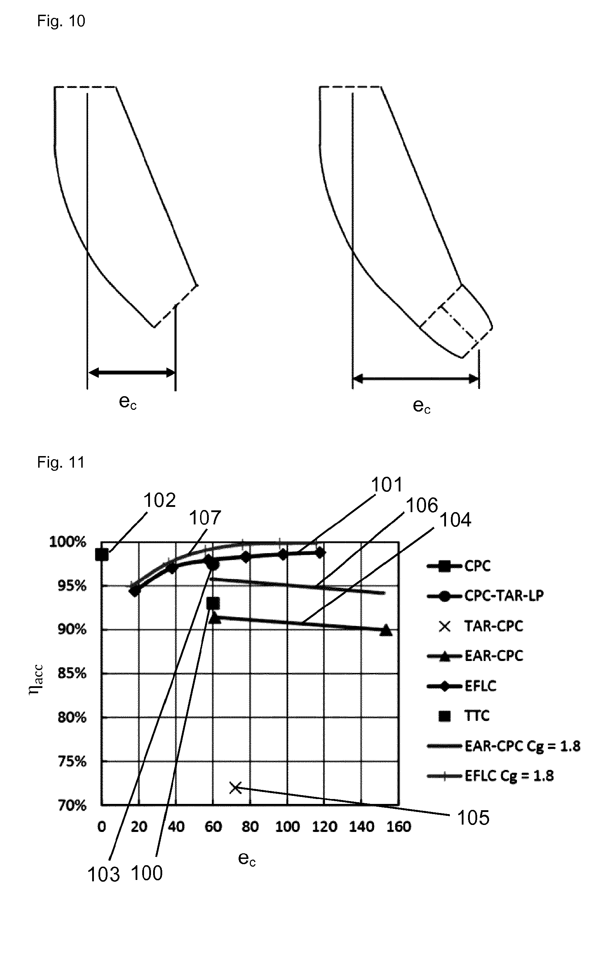

b) Chaves and Collares-Pereira developed an angle rotator that is capable of redirecting radiation through any rotation angle while preserving angular aperture (in the meridian section) [3]. The angle rotator consists of three flat mirrors and one elliptic mirror (EAR, see Fig. 10 left side; taken from [4]). Since the elliptic angle rotator preserves angular aperture, it may be used before or after a concentrating optic without loss of ideality (in the meridian section).

c) The Compound Parabolic Concentrator (CPC) is an ideal concentrator in two dimensions for an infinite source of half-angular aperture $\theta_{acc}$. In revolved three-dimensional geometry, it falls short of ideality due to partial rejection of non-meridian (skew) rays.

d) A light pipe (LP) is a simple extruded section which can be used to guide radiation. In the meridian section it preserves angular aperture and may therefore be used before and after a solar concentrator, see Fig. 7.

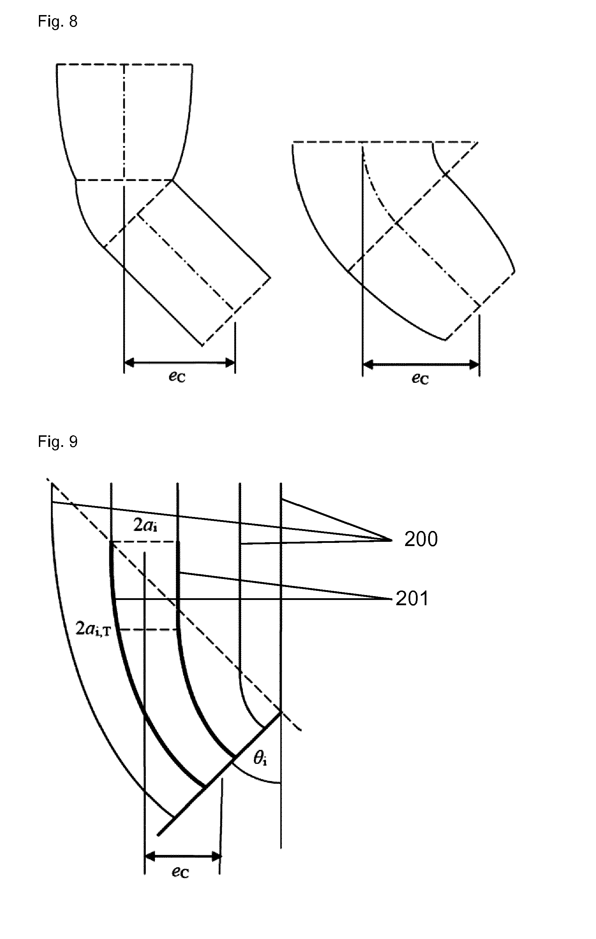

e) The CPC-TAR-LP consists of a CPC with the inlet placed at the focal plane. A torus is placed at the exit of the CPC to redirect radiation from the exit of the CPC. A light-pipe is used to gain further eccentricity. The inner radius of the torus is chosen as zero, since in general a higher eccentricity with a fewer number of reflections can be achieved when combining a small inner radius torus with a light-pipe than when using a large inner radius torus alone. The length of the light-pipe placed at the end of the torus is chosen to achieved a center-to-center eccentricity of 60 mm, see Fig. 8 left side.

f) Due to the high number of reflections in the CPC-TAR-LP, the TAR-CPC was investigated. The TAR-CPC configuration can achieve a higher eccentricity with fewer reflections that the CPC-TAR-LP configuration since rotation is performed before the CPC such that the CPC length contributes to the eccentricity. It is expected that the TAR-CPC will suffer from a low acceptance efficiency due to dilation of the angular aperture by the torus, see Fig. 8 right side.

g) The EAR-CPC has the advantages of the TAR-CPC but with the EAR preserving angular aperture thus hypothetically leading to a higher acceptance efficiency. Drawbacks are difficulties in manufacturability, reduced design flexibility as the EAR design is fixed by the angular aperture and rotation angle as opposed to the TAR where the inner radius can be chosen independent of the rotation angle, see Fig. 10 right side.

h) Any two mirrors placed along lines of flow of a Lambertian radiator constitute an ideal concentrator in two dimensions. Considering the lines of flow of an inverted V-wedge receiver as in Fig. 9 reveals some interesting concentrator profiles. The lines of flow are confocal parabolas with focus at the tip of the wedge. By placing mirrors along any two flowlines, an ideal eccentric concentrator with exit aperture rotated by an angle 90°- $\theta_c$ with an arbitrarily large eccentricity can be obtained. The main drawback of these designs is a high average number of reflections due to the high length to aperture (slenderness) ratio. To partially overcome this, the so-called Eccentric FlowLine Concentrator (EFLC) can be truncated on the inlet side with little loss of concentration and eccentricity. Fig. 9 shows a schematic drawing of an EFLC constructed from the lines of flow 200 from an inverted V-wedge receiver. Placing mirrors 201 along any two lines of flow constitute an ideal concentrator in two dimensions. The inlet side of the EFLC can be truncated to shorten the concentrator and reduce the average number of reflections without significant loss of concentration and eccentricity

Tailored Toroid Concentrator (TTC)

Fig. 1 to Fig. 3 and Fig. 16 show a solar deflection device 1 according to the invention that in the following is referred to as tailored toroid concentrator (TTC). Such a TTC concentrates and redirects electromagnetic radiation and might be used for directing concentrated electromagnetic radiation particularly from a single stationary source particularly to a plurality of apertures of a multiple-cavity receiver, for example an array of cavities, each with an individual aperture.

The TTC is a tailored concentrator based on a torus with geometry modified to achieve ideal concentration at maximum optical efficiency. The TTC particularly comprises all or some of the following features:

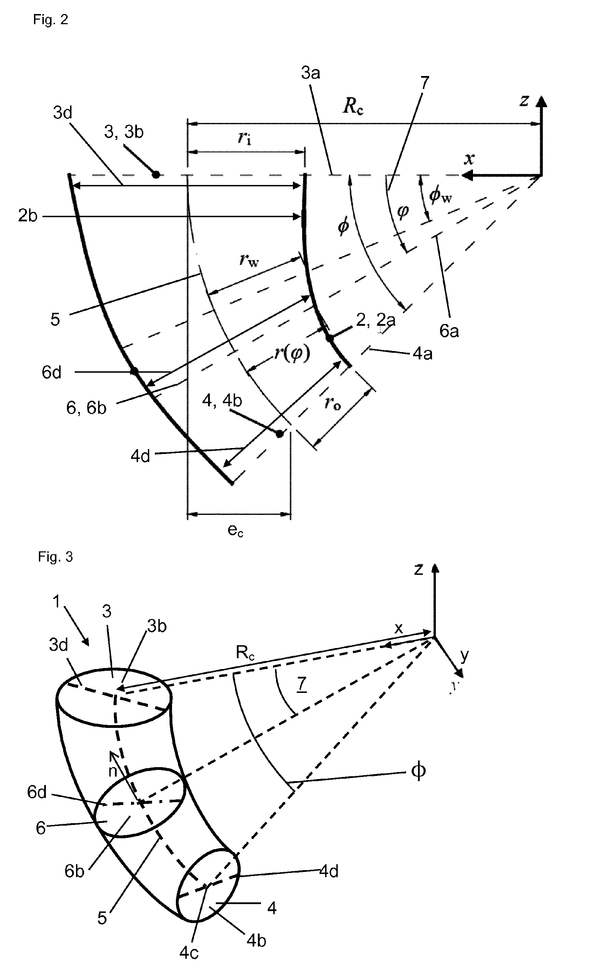

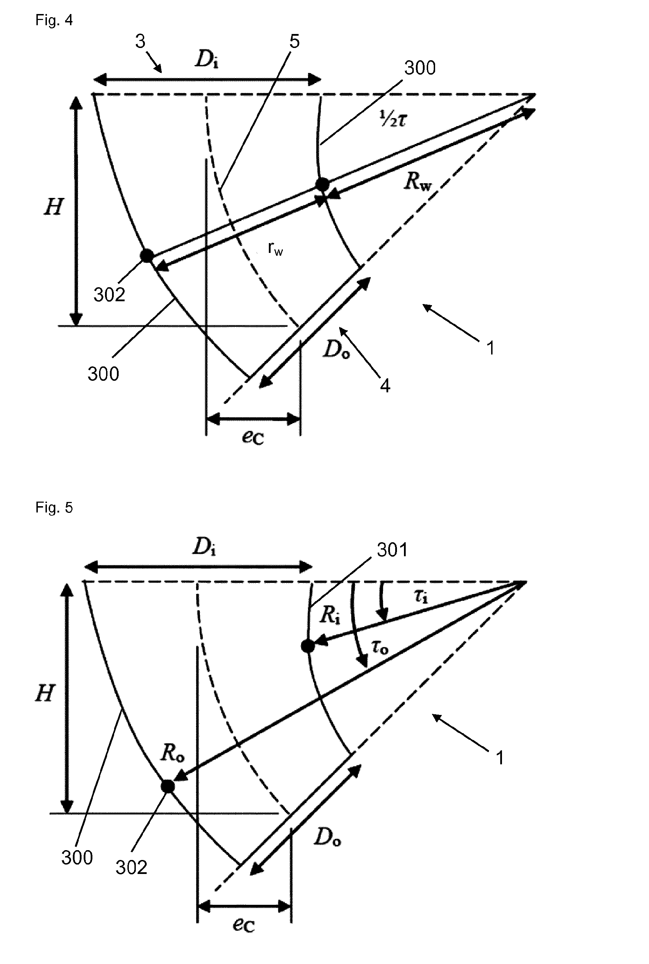

- electromagnetic radiation is collected by a circular inlet aperture 3 of radius $r_i$, within a nominal half acceptance angle 9 ($\theta$), and redirected to a circular exit aperture 4 with a radius $r_o$ or with a diameter 4d that is smaller than the radius $r_i$ or diameter 3d of the inlet aperture 3 respectively,
- the exit aperture 4 is tilted by a rotation angle of $\phi$, wherein said rotation angle corresponds to the largest deflection angle 7, and wherein the exit aperture 4 is furthermore laterally displaced by an eccentricity $e_c$, with respect to the inlet aperture 3,
- the eccentricity $e_c$ and rotation angle $\phi$ may be chosen to achieve the required separation and inclination of the plurality of cavity apertures,
- the geometric concentration $C = A_i/A_o$ is set equal to the theoretical limit of $1/\sin^2(\theta)$ imposed by the three-dimensional conservation of étendue,
- the TTC features low average number of reflections (n), compared to composite devices comprised of existing optical components, thus minimizing power loses due to finite reflectivity of mirror surfaces,
- the optical efficiency $\eta_{optical}$ through the TTC may approach that of conventional non-imaging concentrators which only concentrate and do not redirect radiation,
- the geometry of the TTC is defined by a curved line 5 that is particularly a circular arc centerline in the two-dimensional cross-section through the plane of symmetry of the TTC (as shown in Fig. 2),
- the geometric concentration C can be reduced from the theoretical limit by slightly increasing the exit aperture diameter 4d, leading to an increase in optical efficiency $\eta_{optical}$,
- the three dimensional geometry is formed by a series of circular cross-sections 6 cut at a deflection angle 7 ($\varphi$) with respect to the inlet aperture 3,
- the normal of each circular cross-section 6 is tangent to the centerline 5 at the point of intersection,
- the diameter 6d or radius ($r(\varphi)$) of each circular cross-section 6 is defined by a function S, particularly a taper function S, with $r = S(\varphi)$, where S is particularly an interpolant of linear, quadratic, or cubic form,
- the mirror profiles may be tailored by changing the taper function S to maximize optical efficiency $\eta_{optical}$,
- the inner $R_i$ and outer radii $R_o$ of the solar deflection device 1 are chosen to meet the required eccentricity $e_c$ and rotation angle $\phi$ (see e.g. Fig. 5).

Example of an embodiment of a TTC

The construction of such a tailored toroidal concentrator particularly begins in the x-z plane with a curved line 5, particularly a circular arc centerline covering a rotation angle $\phi$ and radius $R_c$ centered at the origin as shown in Fig. 2. The inlet aperture 3 extends along the inlet plane 3a along the x-y-axis. The circular inlet aperture 4 with a radius $r_i$ that is smaller than the radius of the circular arc centerline $R_c$, is centered at the start of said curved line 5 (defining a deflection angle of $\varphi = 0$), laying in the x-y plane. The center-to-center eccentricity $e_c$ of the TTC is given by $e_c = R_c(1-\cos(\phi))$. Each deflection angle 7 in the range between $0 \leq \varphi \leq \phi$ defines a cross-section 6 that is comprised in a plane 6a that intersects the inlet plane 3a enclosing said deflection angle 7 and that is perpendicular to said curved line 5 at the point of intersection with the curved line 5. The circular exit aperture 4 with a radius $r_o$ that is smaller than the radius of the inlet aperture $r_i$, $r_o < r_i < r_c$, is centered at the end ($\varphi = \phi$) of the curved line 5 through a plane whose normal is tangent to the end of the curved line 5. The exit aperture radius $r_o$ is nominally chosen as $r_i = r_o \sin(\theta)$, corresponding to the theoretical limit of geometric concentration C for partially collimated incident radiation of nominal half acceptance angle $\theta$. Selecting a slightly larger exit aperture radius $r_o$ may be beneficial in improving optical efficiency $\eta_{optical}$, with a slight reduction from the theoretical maximum geometric concentration C. The reflective surface 2b of the TTC is defined by a series of circular cross-sections 6 from the inlet to exit aperture 3 on planes 6a whose normals n are tangent to the curved line 5 at the intersection point where the respective plane 6a intersects the curved line, as shown in Fig. 3. The "taper" of the solar deflection device 1 is the function S describing the radius r of each circular cross section 6 as a function of the deflection angle 7 (also referred to as $\varphi$). The complete parametric equations of the surface in three dimensions, for an origin placed at the center of the curved line 5, with x-z as the symmetry plane of the TTC, are:

$$r = S(\varphi)$$

$$x = (r\cos(\psi) + R_c)\cos(\varphi)$$

$$y = (r\cos(\psi) + R_c)\sin(\varphi)$$

$$z = r\sin(\psi)$$

for $0 \leq \varphi \leq \phi$, and $0 \leq \psi < 2\pi$. The resulting shape is a surface from the circular inlet aperture 3 to the circular exit aperture 4 through the circular cross-sections 6 of radius $r = S(\varphi)$.

Various taper functions S are possible, but generally interpolating functions are used. Depending on the number of interpolation points (also termed knots) used in addition to the endpoints ($\varphi = 0$, $r_i$) and ($\varphi = \phi$, $r_o$), different interpolation functions (also termed interpolants) may be used. The simplest interpolant is (with zero additional knots) the linear interpolant $r(\varphi) = r_i - (r_i - r_o)\,\varphi/\phi$. An additional interpolation point may be defined at the "waist" of the device at a deflection angle $\phi_w$ (given a nominal value of $\frac{1}{2}\phi$) and radius $r_w$. It is then possible to define a piecewise linear spline, a parabola (quadratic), or piecewise cubic spline through the three knots. For $\phi_w = \frac{1}{2}\phi$), a value of $r_w = \frac{1}{2}(r_i + r_o)$ produces a linear interpolant for a spline of any degree. The waist control point can be tailored to maximize the optical transfer efficiency of the TTC. Additional knots provide additional degrees of freedom to tailor the TTC.

Due to its high degree of smoothness, the cubic spline is a preferred interpolant for the taper function S. For one additional interpolation point at the waist, a natural cubic spline $S(\varphi)$ may be fitted through knots I(0, $r_i$), W($\phi_w$, $r_w$) and O($\phi_o$, $r_o$). The 3-point spline has two segments: the first segment ranges from the inlet to the waist, and second segment ranges from the waist to the exit, with second derivatives set to zero at the two ends (natural spline), and first and second derivatives matched at W. The interpolant for the j$^{th}$ segment has the form:

$$S_j(\varphi) = a_j + b_j t_j + c_j t_j^2 + d_j t_j^3$$

where $t_j = t_1 = \varphi/\phi_w$ for the first segment, and $t_j = t_2 = (\varphi - \phi_w)/(\phi - \phi_w)$ for the second segment. The coefficients of the interpolant are:

$$a_1 = r_i \qquad\qquad a_2 = r_w$$

$$b_1 = 0.25(-5r_i + 6r_w - r_o) \qquad\qquad b_2 = 0.5(-r_i + r_o)$$

$$c_1 = 0 \qquad\qquad c_2 = 0.75(r_i - 2r_w + r_o)$$

$$d_1 = 0.25(r_i - 2r_w + r_o) \qquad\qquad d_2 = 0.25(-r_i + 2r_w - r_o)$$

One way to design such a TTC is to choose the inlet (and/or exit) aperture for maximum concentration $C = 1/\sin^2(\theta)$, and subsequently tailor the waist radius $r_w$ at half the rotation angle $\phi$ to yield the highest optical efficiency $\eta_{optical}$.

The particularly highest optical efficiency $\eta_{optical}$ can be estimated for example by a computer simulation.

Results of estimatina a TTC shape with computer simulations

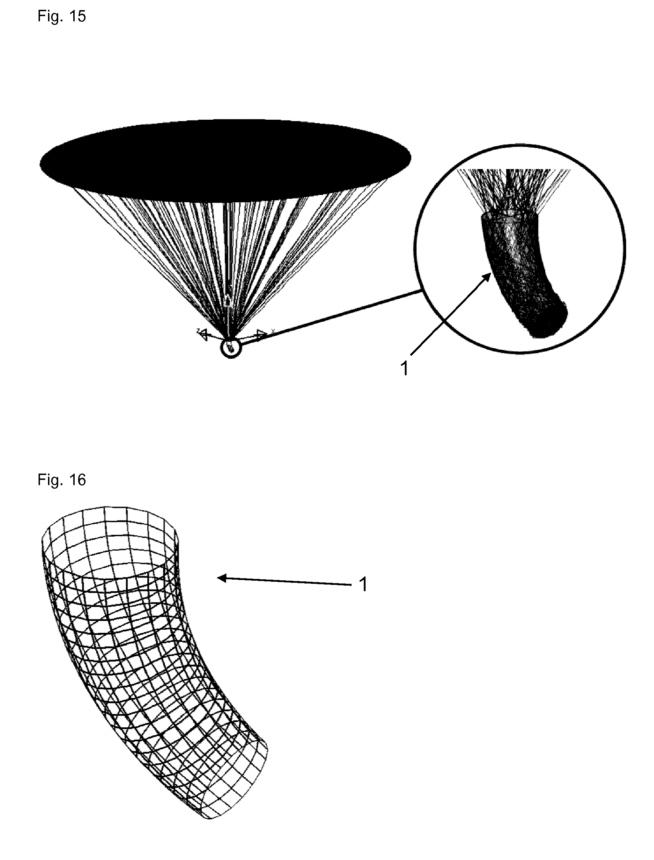

Ray-tracing simulations were performed in LightTools 7.1.0 using solid model geometries built in SolidWorks 2011. The radiation source was modelled as a Lambertian disk of radius 2.5 m at a distance of 2.5 m from the focal plane (i.e. subtending a rim angle of 45°). A low number of rays (25 000) were traced for each simulation to facilitate the investigation of many designs. The estimated error on the power reaching the exit plane was below 1% for all simulations (see Fig. 15)

The results are compared to other solar deflection devices.

The acceptance efficiency of a 45° three dimensional Compound parabolic concentrator (CPC) is used as a reference. As mentioned above, the CPC is an ideal concentrator in two dimensions for an infinite source of half-angular aperture $\theta_{acc}$. In revolved three-dimensional geometry, it falls short of ideality due to partial rejection of non-meridian (skew) rays.

In Fig. 11 it is shown that the EFLCs 101 (represented by the diamond-shaped markers) have the highest acceptance efficiency $\eta_{acc}$ due to their ideal two dimensional construction. For large eccentricity $e_c$ (i.e. very slender designs), the EFLC 101 actually surpasses the three-dimensional CPC 102 (represented by the square-shaped marker at 0 degree $e_c$) in terms of acceptance efficiency. The CPC-TAR-LP design 103 (represented by the circular shaped marker) also has a very high acceptance efficiency $\eta_{acc}$ which should essentially be equivalent to that of the CPC 102 alone since both the TAR and the LP are ideal in three dimensions. The TTC 100 shown (represented the square-shaped marker at 60°$e_c$) has an optimized waist width and performs better than expected considering that it is not constructed from an ideal two-dimensional geometry. The EAR-CPC 104 performs reasonably well but is the lowest of the high-performance designs due to slight dilation of angular aperture through the EAR in 3D. The TAR-CPC 105 performs poorly due to significant dilation of angular aperture by the TAR. Furthermore the results of an EAR-CPC 106 and an EFLC 107 design each with a geometric concentration C of 1.8 are shown.

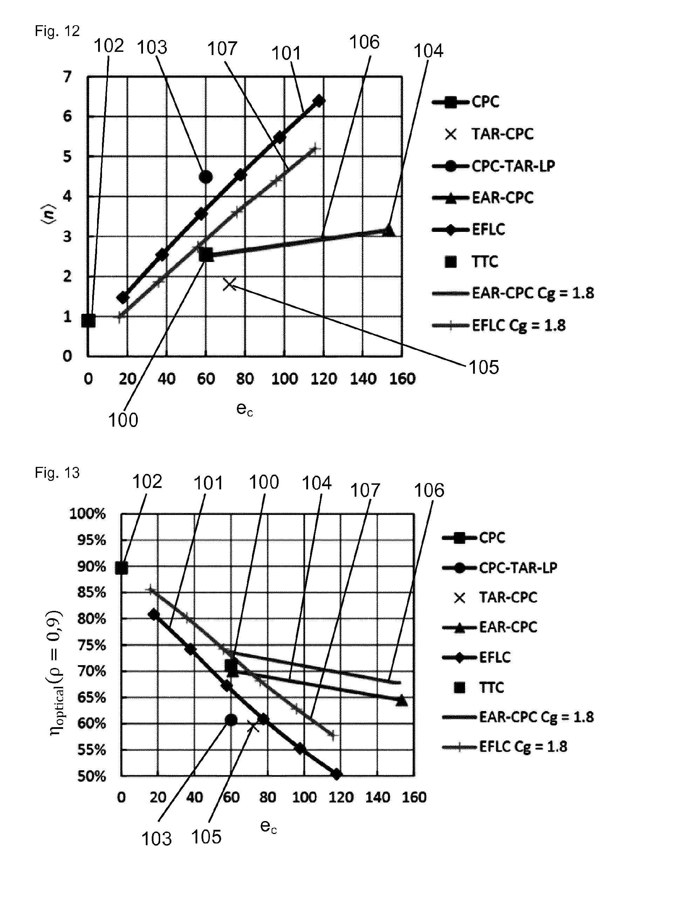

In Fig. 12 it is shown that the long slender designs, particularly the EFLC 101 and the CPC-TAR-LP 103 have a very high average number of reflections (n) for high eccentricities $e_c$. The EAR-CPC 104 and TTC 100 designs have a comparable average number of reflections $\langle n \rangle$. The TAR-CPC 105 has the lowest average number of reflections $\langle n \rangle$ owing to its extremely compact design.

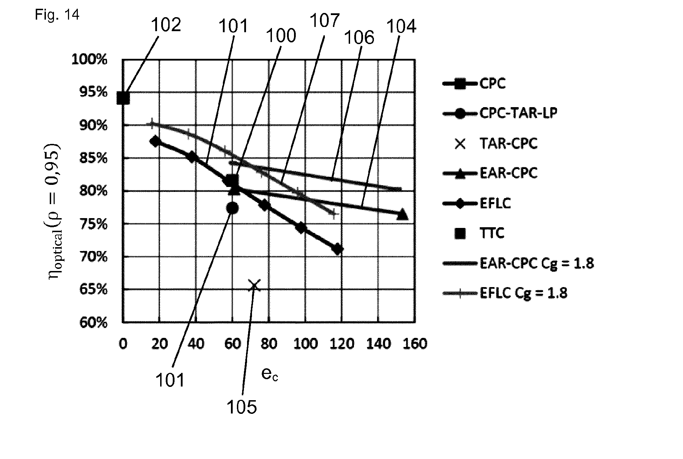

The combined effect of the acceptance efficiency $\eta_{acc}$ and the average number of reflections $\langle n \rangle$ is shown in Fig. 13 and Fig. 14. The EFLC 101 is a promising design for low eccentricities $e_c$ but is impractical for high eccentricities $e_c$ due to an increased average number of reflections $\langle n \rangle$. The EAR-CPC 104 is a potential candidate for medium eccentricities $e_c$, but is long for a given aperture diameter. The TTC 100 is particularly the best design for high eccentricities $e_c$. Furthermore the results of an EAR-CPC 106 and an EFLC 107 design each with a geometric concentration C of 1.8 are shown.

## Example of a specific design of a TTC

- Inlet aperture diameter, $D_i$ = 40 mm;
- Outlet aperture diameter, $D_o$ = 30 mm;
- Eccentricity $e_c$ = 50 mm;
- Normalized eccentricity, $e_c /D_i$ = 1.25;
- Geometric concentration, $C = (D_i/D_o)^2 = 16/9 \approx 1.78$;
- Maximal acceptance angle, $\theta_{max} = \sin^{-1}(C^{-0.5}) = 48.6°$;
- Nominal half acceptance angle, $\theta = 45°$;
- Etendue loss, $\sin^2\theta_i S/\sin^2\theta_{max} = 0.94$;
- Outlet inclination, T = 45°

## Source specification

Simulations were performed with a Lambertian disk source approximating the geometry of a solar simulator.

- Focal length, f = 1 m;
- Source diameter, $D_{max}$ = 2.25 m;
- Maximum rim angle, $\varphi_{max} = \tan^{-1}(D_{max}/2f) = 48.4°$;
- Nominal rim angle, $\Phi_{nom} = 45°$;
- Source diameter at nominal rim angle, $D_{nom}$ = 2 m;
- Aim area diameter, $D_i$ = 40 mm

## Geometry specification

Three different geometric constructions with an increasing number of degrees-of-freedom were investigated. In all cases, the three dimensional geometry was obtained by lofting from the circular inlet aperture to the circular outlet aperture along the specified guide curves.

Baseline

The baseline design consists of a circular centerline 5 with a radius $R_c$ which governs the position of the inlet and outlet aperture 3, 4. The cross-section through the reflective surface are represented by two curved lines (i.e. the guide profiles), particularly a circular arc. The design has no degrees of freedom to be used as optimization parameters.

Spline 1

The Spline 1 design utilizes the height H and eccentricity $e_c$ to position the inlet and outlet apertures 3, 4. The two guide profiles 300, 301 - that are the cross-sectional lines of the funnel 2 representing the funnel wall 2a - are natural cubic splines passing through the inlet and outlet aperture 3, 4 edges wherein the guide profile's 300, 301 shape is controlled by a knot 302 placed between a beginning and an end of the respective guide profile, particularly at the "waist" of the solar deflection device 1. There are three degrees of freedom which may be used as optimization parameters. The optimization parameters are particularly given by the radius $R_w$ from one of the guide profiles 300, the radius $r_w$ of the funnel 2 at a particular deflection angle and the height H of the funnel 2 as shown in Fig. 4.

Spline 2

The Spline 2 design is similar to the Spline 1 design, but the placement of the knots is not restricted to be collinear with the origin. The two guide profiles 300, 301 on the inside and outside of the solar deflection device 1 may be chosen independently. There are five degrees of freedom which may be used as optimization parameters. The optimization parameters are particularly given by

- the radius of the line in the x-z plane from the origin to the interior knot of the inner guide profile $R_i$,,
- the same but for the outer guide profile $R_o$,
- a first deflection angle $\tau_i$ of the line in the x-z plane from the origin to the interior knot of the inner guide profile 300,
- a second deflection angle $\tau_o$ of the line in the x-z plane from the origin to the outer knot of the outer guide profile 301, and
- the height H of the solar deflection device 1 device as shown in Fig. 5.

Optimization was performed to maximize optical efficiency for a reflectivity of 95% at the nominal acceptance angle using $10^5$ rays. The "alternate engine" in LightTools was used with an exit criterion of less than a $10^{-5}$% improvement on the objective function. However, it is likely that the noise floor of the MC simulation provides a less strict exit criterion.

After the optimization, the resulting designs were traced with $10^6$ rays. The results for an incident radiant power of $Q_i = 100$ W, are shown below. The values of the output power $Q_o$ are equal to the percent optical efficiency of the design.

| | | $\rho=1$ | | | $p=0.95$ | | | $\rho=0.9$ | | |
| --- | --- | --- | --- | --- | --- | --- | --- | --- | --- | --- |
| | \<n\> | $Q_o$ | $Q_{rej}$ | $Q_{abs}$ | $Q_o$ | $Q_{rej}$ | $Q_{abs}$ | $Q_o$ | $Q_{rej}$ | $Q_{abs}$ |
| Baseline | 3.57 | 99.16 | 0.93 | 0.00 | 83.04 | 0.26 | 16.70 | 69.85 | 0.08 | 30.07 |
| Baseline* | 3.79 | 99.16 | 0.93 | 0.00 | 82.12 | 0.26 | 17.62 | 68.42 | 0.08 | 31.50 |
| Spline 1 | 3.05 | 98.42 | 1.58 | 0.00 | 84.91 | 0.69 | 14.40 | 73.27 | 0.32 | 26.42 |
| Spline 2 | 2.82 | 98.78 | 1.22 | 0.00 | 95.94 | 0.71 | 13.35 | 74.71. | 0.41 | 24.88 |

\* with a 5 mm light pipe at the exit of the concentrator

The design parameters for the optimized designs are given below:

| | Spline 1 | | Spline 2 |
| --- | --- | --- | --- |
| $R_w$ | 125.42 | $R_i$ | 123.43 |
| $r_w$ | 39.77 | $R_o$ | 157.31 |
| H | 98.40 | $T_i$ | 20.20° |
| | | $T_o$ | 40.14° |
| | | H | 97.39 |

References:

[1] M. Collares-Pereira, et al., (1985). "Redirecting concentrated radiation," Proceedings of SPIE, 2538, pp. 131-135.
[2] A. Rabl, (1977). "Radiation transfer through specular passages - a simple approximation," International Journal of Heat and Mass Transfer, 20, pp. 323-330.
[3] J. Chaves and M. Collares-Pereira, (2002). "Ideal concentrators with gaps," Applied Optics, 41, pp. 1267-1276.
[4] J. Chaves, Introduction to nonimaging optics: CRC Press, 2008.

Reference list

| | |
|---|---|
| 1 | solar deflection device |
| 2 | funnel |
| 2a | funnel wall |
| 2b | reflective surface |
| 3 | inlet aperture |
| 3a | inlet plane |
| 3b | inlet area |
| 3c | center of inlet area |
| 3d | diameter of inlet aperture |
| 4 | exit aperture |
| 4a | exit plane |
| 4b | exit area |
| 4c | center of exit area |
| 4d | diameter of exit aperture |
| 5 | curved line |
| 6 | cross-section |
| 6a | plane of cross-section |
| 6b | are of cross-section |
| 6d | diameter of cross-section |
| 7 | deflection angle |
| 9 | nominal half acceptance angle |
| 100 | TTC / Tailored Toroidal Concentrator design |
| 101 | EFLC design |
| 102 | CPC / Compound Parabolic Concentrator design |
| 103 | CPC-TAR-LP design |
| 104 | EAR-CPC design |
| 105 | TAR-CPC design |
| 106 | EAR-CPC design for C = 1.8 |
| 107 | EFLC design for C = 1.8 |
| 200 | lines of flow |
| 201 | mirrors |
| 300 | guide profile |
| 301 | guide profile |
| 302 | knot |
| A | optical axis |
| $D_i$ | diameter of inlet aperture |
| $D_o$ | diameter of exit aperture |
| $r_i$ | radius of inlet aperture |
| $r_o$ | radius of exit aperture |
| H | height of solar deflection device |
| $r_w$ | waist radius |
| $e_c$ | eccentricity |
| F | focal plane |
| S | function |

φ     maximum deflection angle

**Claims**

1. Solar deflection device (1) comprising at least the following components:

   - a hollow funnel (2), comprising a funnel wall (2a) that comprises a reflective surface (2b) on an inside of the funnel (2) for reflecting electromagnetic radiation,
   - an inlet aperture (3) of said funnel (2), wherein the inlet aperture (3) extends within an inlet plane (3a),
   - an exit aperture (4) of said funnel (2), wherein the exit aperture (4) extends within an exit plane (4a) and wherein the area (4b) enclosed by the exit aperture (4) has a different size than the area (3b) enclosed by the inlet aperture (3),
   - a curved line that (5) extends from the center (3c) of the inlet aperture (3) to the center (4c) of the exit aperture (4), wherein for each plane (6a) that intersects said curved line (5) perpendicularly, the reflective surface (2b) of the funnel wall (2a) has a cross-section (6) within said plane (6a), wherein said cross-section (6) encloses an area (6b) and is centered around the curved line (5),
   - a deflection angle (7) that is enclosed between said plane (6a) and the inlet plane (3a).

2. Solar deflection device according to claim 1, wherein the area (3b, 4b, 6b) enclosed by the inlet aperture (3), the exit aperture (4) and/or the cross-section (6) has an oval, particularly a circular shape or elliptical shape.

3. Solar deflection device according to claim 1 or 2, wherein at essentially each point of the curved line (5), the curved line (5) has a curvature that is larger than zero.

4. Solar deflection device according to one of the preceding claims, wherein said curved line (5) is an arc line, particularly a circular arc line with a radius ($R_c$), or a non-parabolic line.

5. Solar deflection device according to one of the preceding claims, wherein the aperture area (3b) of the inlet aperture (3) is larger than the aperture area (4b) of the exit aperture (4).

6. Solar deflection device according to one of the preceding claims, wherein the size of the enclosed area (6b) of the cross-section (6), particularly the diameter (6d) of the cross-section (6) is a continuous function (S) of said deflection angle (7).

7. Solar deflection device according to claim 6, wherein the function (S) is continuously differentiable at least once, particularly twice, more particularly three times.

8. Solar deflection device according to one of the claims 6 or 7, wherein the function (S) is a monotonic function, particularly a strictly monotonic function.

9. Solar deflection device according to one of the claims 6 to 8, wherein the function (S) is an interpolating function, including the diameter (3d) of the inlet aperture (3) and the diameter (4d) of the exit aperture (4) as interpolation points.

10. Solar deflection device according to one of the claims 6 to 9, wherein the function (S) comprises a spline, particularly a linear, a quadratic or a cubic, particularly a natural cubic spline.

11. Solar deflection device according to one of the claims 9 or 10, wherein the function (S) comprises or is a piecewise particularly natural cubic spline connecting a plurality of interpolation points, wherein particularly the size of the enclosed area (3b), particularly the diameter (3d), of the inlet aperture (3) and the size of the enclosed area (4b), particularly the diameter (4d) of the exit aperture (4) are two of the plurality of interpolation points and wherein particularly a third interpolation point corresponds to the size of the enclosed area (6b), particularly to the diameter (6d) of the cross-section (6).

12. Solar deflection device according to one of the preceding claims, wherein the solar deflection device comprises a nominal half acceptance angle (9) between 30° and 60°, preferably 45°.

13. Solar deflection device according to one of the preceding claims, wherein the inlet aperture (3) and the exit aperture (4) enclose a deflection angle (7) between 30° and 60°, preferably 45°.

14. Solar deflection device according to one of the preceding claims, wherein the inlet plane (3a) and the exit plane (4a) are perpendicular to the curved line (5).

Fig. 1

Fig. 2

Fig. 3

Fig. 4

Fig. 5

Fig. 6

Fig. 7

Fig. 8

Fig. 9

Fig. 10

$e_c$        $e_c$

Fig. 11

Fig. 12

Fig. 13

Fig. 14

Fig. 15

Fig. 16

Europäisches
Patentamt

European
Patent Office

Office européen
des brevets

# EUROPEAN SEARCH REPORT

Application Number

EP 15 15 9194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/001106 A2 (STOLUM HANS-HENRIK KOFOED [GB]) 31 December 2008 (2008-12-31) * figures 1a, 1b, 2b * * page 1, paragraph 0003 * * page 5, paragraph 0002 * * page 6, paragraph 0004 - paragraph 0005 * | 1-14 | INV. F24J2/06 F24J2/07 |
| A | EP 2 348 342 A1 (SHARP KK [JP]) 27 July 2011 (2011-07-27) * figures * | 1-14 | |
| A | US 2012/138047 A1 (ASHKIN ARTHUR [US]) 7 June 2012 (2012-06-07) * figures * | 1-14 | |
| A | US 3 899 672 A (LEVI-SETTI RICCARDO) 12 August 1975 (1975-08-12) * figures * | 1-14 | |
| A | US 2008/066799 A1 (CLARK ROY [US]) 20 March 2008 (2008-03-20) * figures * | 1-14 | TECHNICAL FIELDS SEARCHED (IPC) F24J |

The present search report has been drawn up for all claims

| Place of search | Date of completion of the search | Examiner |
|---|---|---|
| The Hague | 17 August 2015 | Fernandez Ambres, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 15 9194

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2015

| Patent document cited in search report | | Publication date | Patent family member(s) | | Publication date |
|---|---|---|---|---|---|
| WO 2009001106 | A2 | 31-12-2008 | EP | 2174070 A2 | 14-04-2010 |
| | | | US | 2010212719 A1 | 26-08-2010 |
| | | | WO | 2009001106 A2 | 31-12-2008 |
| EP 2348342 | A1 | 27-07-2011 | CN | 102122061 A | 13-07-2011 |
| | | | EP | 2348342 A1 | 27-07-2011 |
| | | | US | 2011162712 A1 | 07-07-2011 |
| US 2012138047 | A1 | 07-06-2012 | NONE | | |
| US 3899672 | A | 12-08-1975 | NONE | | |
| US 2008066799 | A1 | 20-03-2008 | US | 2005092360 A1 | 05-05-2005 |
| | | | US | 2008066799 A1 | 20-03-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **M. COLLARES-PEREIRA et al.** Redirecting concentrated radiation. *Proceedings of SPIE,* 1985, vol. 2538, 131-135
- **A. RABL.** Radiation transfer through specular passages - a simple approximation. *International Journal of Heat and Mass Transfer,* 1977, vol. 20, 323-330
- **J. CHAVES ; M. COLLARES-PEREIRA.** Ideal concentrators with gaps. *Applied Optics,* 2002, vol. 41, 1267-1276
- **J. CHAVES.** Introduction to nonimaging optics. CRC Press, 2008